# EUROPÄISCHE PATENTSCHRIFT

(11) **EP 2 857 646 B1**
(45) Veröffentlichungstag und Bekanntmachung des Hinweises auf die Patenterteilung: **22.11.2017**
(21) Anmeldenummer: 14003117.0
(22) Anmeldetag: 09.09.2014
(51) Int. Cl.: F01N 3/20, F01N 13/18, F16L 23/026, F16L 23/028, F16L 23/18

(54) **Abgasanlage für Dieselfahrzeuge**
Exhaust gas system for diesel vehicles
Installation de gaz d'échappement pour véhicules diesel

(30) Priorität: 01.10.2013 DE 102013016235
(43) Veröffentlichungstag der Anmeldung: 08.04.2015
(73) Patentinhaber: DEUTZ Aktiengesellschaft, 51149 Köln (DE)
(72) Erfinder: Pister, Manfred, 51147 Köln (DE); Ohmann, Jörn, 45257 Essen (DE)

(56) Entgegenhaltungen:
- EP-A2- 2 101 049
- DE-A1- 2 111 321
- US-A1- 2013 047 583
- US-B1- 6 279 965

## Beschreibung

Die Erfindung betrifft eine Abgasanlage für Dieselfahrzeuge mit einem flexiblen Flansch. Die Verwendung von Flanschen ist eine Methode, Rohrabschnitte oder auch Luftkanäle dicht, aber lösbar miteinander zu verbinden. Entscheidend für die Dichtheit ist der Anpressdruck der kreisringförmigen Dichtflächen auf die dazwischen liegende Dichtung. Der Anpressdruck wird mit Schrauben aufgebracht, die durch Bohrungen in den Flanschblättern gesteckt sind. Diese Flansche werden in der Regel mit dem Rohr verschweißt. Sie gehören zu den Rohrleitungsteilen, auch Fittings genannt. Beispielsweise sind derartige Flansche an Armaturen und Messgeräten angegossen. Bekannt sind beispielsweise Stahlflansche, Gusseisenflansche, Flansche aus Kupferlegierungen, Flansche aus Aluminiumlegierungen. Weiter sind Flansche aus Edelstahl- oder Kohlenstoff Stahlsorten bekannt.

Aus der EP 2101049 A2 ist ein kompaktes Abgasnachbehandlungssystem mit einem faltenbalgähnlichen Wellrohr bekannt.

Die US 20130047583 A1 zeigt ein Abgasnachbehandlungssystem.

In der US 6279965 B1 wird ein konisches Flanschverbindungssystem in einer Abgasanlage offenbart.

Das Wort Flansch bedeutet "aus einer Fläche herausragen". Rohrleitungsflansche ragen aus einer Rohrleitung heraus. Es erklärt aber auch, dass Handwerker etwas an eine Wand anflanschen können. Und ebenso die Flansche (Gurte), welche den oberen und unteren Abschluss eines H-Stahlbauprofils (früher: Doppel-T-Träger) bilden (vgl. engl. flange).

Es gibt verschiedene Flanschtypen, die für unterschiedliche Anwendungsbereiche eingesetzt werden. So können Flansche zum Beispiel an das Rohr geschweißt oder geschraubt werden. Einige Flanschtypen haben ein besseres Stabilitätsverhalten, z. B. geringe Blattverformung bei hohen Schraubenkräften, um besondere Dichtheitsanforderungen zu erfüllen.

Vorschweißflansche sind Flansche mit einem Ansatz, zum Anschweißen beispielsweise an ein Rohr. Sie werden durch Schmieden aus einem Stahlrohling vorgeformt und anschließend durch Drehen und Bohren fertiggestellt. Größere Flansche werden auch aus Formstählen zu Ringen gebogen und dann verschweißt. Dieser Flanschtyp ist konstruktiv besonders stabil und wird auch bei hohen Drücken eingesetzt.

### Überschieb-Schweißflansche mit Ansatz

Diese werden auf das Rohr geschoben und dann mit dem Rohr verschweißt. Sie werden im ANSI-Bereich auch Slip-On-Flansche genannt.

Glatte Flansche werden auf das Rohr geschoben und dann mit dem Rohr verschweißt. Sie werden meist aus einem Blech hergestellt. Größere Flansche werden aus Flachstahl zu Ringen gebogen und dann verschweißt.

Blindflansche sind ohne Mittelbohrung und werden zum Verschließen verwendet, z. B. von zusätzlichen Stutzen an Druckbehältern oder von Rohrleitungsenden.

Gewindeflansche haben statt eines Ansatzes zum Schweißen ein Innengewinde, in welches das Rohr eingeschraubt wird.

Lose Flansche werden lose auf das Rohr aufgeschoben. Die eigentliche Befestigung auf dem Rohr übernimmt der dann anzuschweißende Vorschweißring oder Vorschweißbund. Sie werden auch verwendet für angeformte Bördel. Diese Bauart wird angewendet, wenn die Stellung des Lochkreises des Gegenflansches erst bei der Endmontage definiert werden kann.

### Blockflansche

Diese Bauart besteht aus einem geschmiedeten oder einem gegossenen Block. Die zugehörigen Schraubenlöcher haben ein Innengewinde. Derartige Flansche werden vor allem an Druckbehältern als Rohrstutzen geschweißt sowie zur Befestigung von Schaugläsern genutzt.

### Apparateflansche

Sie haben die gleiche Funktion wie normale Flansche, werden aber vorzugsweise an Kessel, Druckbehälter und Ähnlichem eingesetzt. Sie können daher andere Abmessungen der Flanschblattdicke haben, z. B. bei Gussgehäusen.

### SAE-Flansche

SAE-Flansche werden in der Ölhydraulik in verschiedenen Ausführungen eingesetzt. Diese Flanscharmaturen sind auch als CAT-Flansche bekannt, da sie von Caterpillar in den USA entwickelt worden sind. SAE-Flansche werden in die Druckstufen 3000, 6000 und 9000 PSI unterteilt.

Vakuumflansche dienen der lösbaren Verbindung von Vakuumgefäßen. Es gibt sie als Kleinflansche, Klammerflansche und CF-Flansche.

In Abgasanlagen mit SCR-Technologie werden die Rohrverbindungen nach Eindosierung des Reduktionsmittels (AdBlue / DEF / AUS32) im Allgemeinen als Schraub- (Bild1) oder Schweißverbindung ausgeführt. Diese Verbindungen haben den Nachteil, dass die Verdrehung der beiden Rohrseiten gegeneinander gar nicht (Schweißverbindung) oder nur entsprechend des Flanschbildes (Schraubverbindung) möglich ist.

Bekannte 6-Loch-Flansche ermöglichen eine Verdrehung eines SCR-Katalysators zur Mischstrecke in 60° Schritten. Dies ist in Zeiten enger Bauräume ungeeignet.

Aufgabe der vorliegenden Erfindung ist es, die oben genannten Nachteile zu vermeiden.

Die Aufgabe wird gelöst durch eine Abgasanlage für Dieselfahrzeuge gemäß Anspruch 1.

Hierbei ist von Vorteil, dass die Flanschverdrehung flexibel erfolgen kann, die axiale Verpressung der Dichtung derart erfolgt, dass eine optimale Flächenpressung realisiert wird, sowie eine Abdichtung des Systems gegen AdBlue und Abgas.

Ein weiterer Vorteil bei Losflanschen und Blindflanschen ist es, wenn statt der Standard Flanschblattstärke eine den jeweiligen Anforderungen genügende Blattstärke, z. B. eine reduzierte, eingesetzt wird. Gleichmäßige Kraftverteilung / genau definierte Krafteinleitung auf Dichtbereich möglich.

Die flexible Flanschverbindung ist für jede Art Abgasanlage geeignet; nicht nur für SCR Anwendungen.

Weitere wichtige Merkmale und Vorteile ergeben sich aus den Unteransprüchen, aus den Zeichnungen und aus der nachfolgenden Beschreibung eines bevorzugten Ausführungsbeispiels anhand der Zeichnungen. Es zeigen:
- Figur 1: Explosionszeichnung eines Schraubflanschs
- Figur 2: Schraubflansch aus Figur 1 in Drauf- und Seitenansicht
- Figur 3: Schnittdarstellung A-A des Schraubflanschs aus Figur 2
- Figur 4: Abgasanlage einer Brennkraftmaschine

Bei der vorliegenden Erfindung wird eine Schraubverbindung dargestellt, die vor dem Anziehen der Schrauben das Einstellen der beiden Rohre zueinander in jeder beliebigen Winkellage, und somit unabhängig vom Lochbild des Schraubflansches, ermöglicht.

Die flexible Flanschverbindung 9 ist "AdBlue-Dicht"; dicht gegen DEF, AUS 32 nach ISO 22241, und gegen alle gängigen Kraftstoffe und deren Kondensate sowie gegen alle Abgase aus Verbrennungskraftmaschinen.

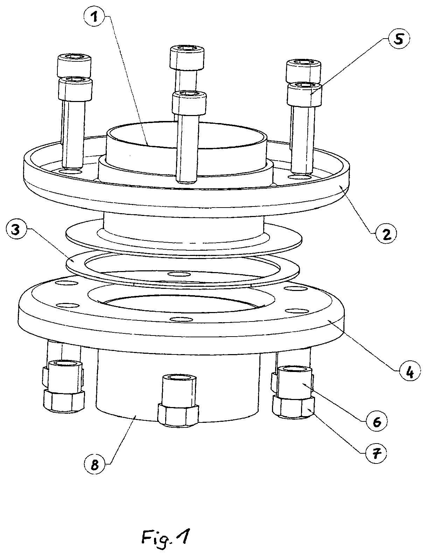

Die in Figur 1 dargestellte Flanschverbindung stellt eine Schraubverbindung zwischen zwei Rohren 1, 8 dar. Dabei ist eine Rohrseite 8 fest mit einem Flansch bzw. Flanschblatt 4 verschweißt. Die Gegenseite ermöglicht durch einen Losflansch 2 die freie Verdrehung des Rohres 1 und somit eine variable Einstellmöglichkeit unabhängig vom Lochbild des Flansches. Nach gewünschter Einstellung der beiden Rohre 1, 8 zueinander werden die Flansche 2, 4 bzw. Flanschblätter gegeneinander verschraubt. Dabei wird die Dichtung 3 zwischen der umgebördelten Stirnfläche des Rohres 1 und dem Gegenflansch 4 mittels Schrauben 5, Distanzhülsen 6 und Mutter 7 verpresst.

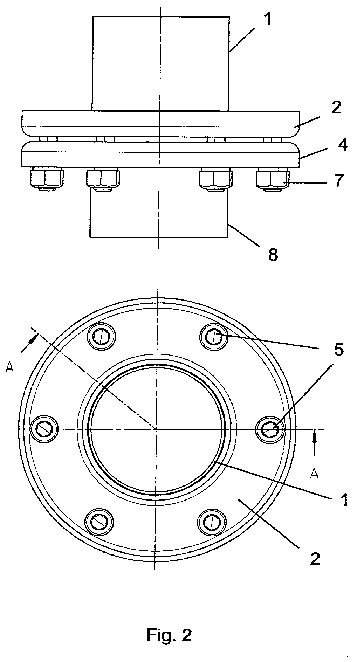

Figur 2 zeigt den Schraubflansch aus Figur 1 in einer Drauf- und einer Seitenansicht. Die Flanschverbindung ist eine Schraubverbindung zwischen zwei Rohren 1 und 8. Dabei ist eine Rohrseite 8 fest mit einem Flansch bzw. Flanschblatt 4 verschweißt. Die Gegenseite ermöglicht durch einen Losflansch 2 die freie Verdrehung des Rohres 1 und somit eine variable Einstellmöglichkeit, unabhängig vom Lochbild des Flansches. Nach gewünschter Einstellung der beiden Rohre 1, 8 zueinander werden die Flansche 2, 4 bzw. Flanschblätter gegeneinander verschraubt. Dabei wird die in Figur 1 offenbarte Dichtung 3 zwischen der umgebördelten Stirnfläche des Rohres 1 und dem Gegenflansch 4 mittels Schrauben 5, Distanzhülsen 6 und Mutter 7 verpresst.

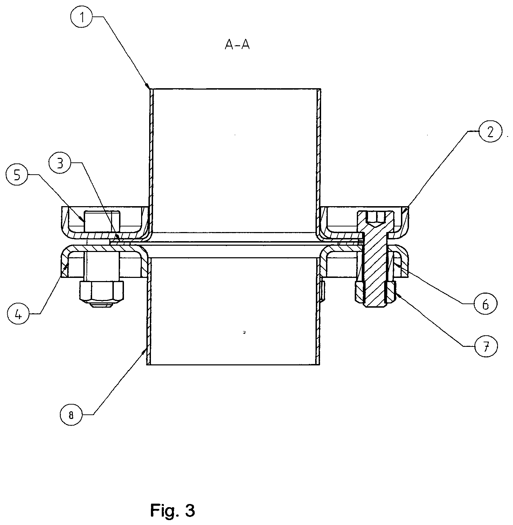

In Figur 3 wird eine Schnittdarstellung entlang der Schnittlinie A-A des Schraubflanschs aus der Figur 2 gezeigt.

Die offenbarte Flanschverbindung stellt eine Schraubverbindung zwischen den zwei Rohren 1 und 8 dar. Die Rohrseite 8 ist fest mit einem Flansch bzw. Flanschblatt 4 verschweißt. Die Gegenseite ermöglicht durch einen Losflansch 2 die freie Verdrehung des Rohres 1 und somit eine variable Einstellmöglichkeit unabhängig vom Lochbild des Flansches. Nach der gewünschten Einstellung der beiden Rohre 1 und 8 zueinander werden die Flansche 2, 4 bzw. Flanschblätter gegeneinander verschraubt. Dabei wird die Dichtung 3 zwischen der umgebördelten Stirnfläche des Rohres 1 und dem Gegenflansch 4 mittels Schrauben 5, Distanzhülsen 6 und Mutter 7 verpresst.

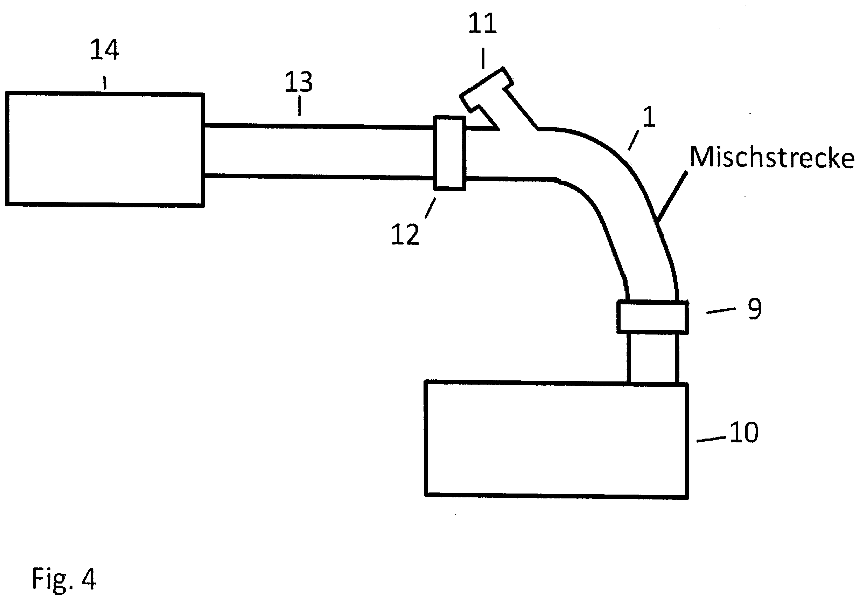

Figur 4 zeigt eine schematische Darstellung einer Abgasanlage einer Brennkraftmaschine mit einem Motor 14, von dem in Strömungsrichtung des Abgases des Motors 14 ein Abgasstrang 13 folgt. Im Anschluss an den Abgasstrang 13 folgt in Strömungsrichtung des Abgases des Motors 14 ein Rohr 1, das als Mischstrecke von Abgas und der in Rohr 1 integrierten Harnstoffeindosierung 11 dient. Abgasstrang 13 und Rohr 1 sind mittels eines Flansches 12 gasdicht verbunden. Am Ende - in Strömungsrichtung des Abgases des Motors 14 - des als Mischstrecke dienenden Rohres 1 ist ein SCR Katalysator angeordnet. Rohr 1 und SCR-Katalysator 10 sind mittels der gas- und flüssigkeitsdichten flexiblen Flanschverbindung 9, die in den Figuren 1, 2 und 3 gezeigt wird, miteinander verbunden.

Die Erfindung ist grundsätzlich für alle abgasdichten bzw. flüssigkeitsdichten Verrohrungen an Abgasanlagen, bzw. gasführenden, respektive heißgasführenden Verrohrungen/Rohrverschraubungen, verwendbar.

Im Besonderen und in dem hier eingesetzten Fall wird die Erfindung zur Abdichtung der Abgasverrohrung eines SCR-Katalysators gegenüber dem Reduktionsmittel AdBlue (AUS 32;DEF) im Abgas verwendet.

### Bezugszeichen

- 1: Rohr (an Austrittsseite gebördelt)/Mischstrecke
- 2: Flansch (lose)
- 3: Dichtung (AdBlue beständig)
- 4: Flansch (Gleichteil zu Pos.2)
- 5: Schrauben
- 6: Distanzhülse
- 7: Mutter
- 8: Rohr (an Flansch Pos.7 angeschweißt)
- 9: Flexible Flanschverbindung
- 10: SCR Katalysator
- 11: Dosiervorrichtung/Harnstoffeindosierung
- 12: Flansch
- 13: Abgasstrang
- 14: Motor

## Patentansprüche

1. Abgasanlage für Dieselfahrzeuge, umfassend wenigstens eine Dosiervorrichtung (11) zum Einbringen und Dosieren eines schadstoffvermindernden Mediums in ein durch ein Strömungsrohr (1) eines Abgasstrangs (13) einer Brennkraftmaschine (14) strömendes Abgas, insbesondere zum Einbringen eines Reduktionsmittels und/oder eines Reduktionsmittel-Vorläufers wie beispielsweise Harnstoff und/oder einer wässrigen Harnstofflösung, wobei der Abgasstrang (13) wenigstens eine flexible Flanschverbindung (9) aufweist,
**dadurch gekennzeichnet, dass** die flexible Flanschverbindung (9) wenigstens einen losen Flansch (2) aufweist, wobei der lose Flansch (2) die freie Verdrehung des Rohrs (1) ermöglicht und die flexible Flanschverbindung (9) insbesondere im Bereich der Mischstrecke (1) und in Strömungsrichtung des Abgases vor dem SCR-Katalysator (10) angeordnet ist, wobei die flexible Flanschverbindung (9) wenigstens zwei Flansche aufweist (2, 4) und wobei die flexible Flanschverbindung (9) wenigstens ein an der strömungsseitigen Austrittsseite gebördeltes Rohr (1) aufweist und wobei nach gewünschter Einstellung der beiden Rohre (1, 8) zueinander die Flansche (2, 4) bzw. Flanschblätter gegeneinander verschraubt werden, dabei wird die Dichtung (3) zwischen der umgebördelten Stirnfläche des Rohres (1) und dem Gegenflansch (4) mittels Schrauben (5), Distanzhülsen (6) und Mutter (7) verpresst.

2. Abgasanlage für Dieselfahrzeuge nach einem oder mehreren der vorgenannten Ansprüche,
**dadurch gekennzeichnet, dass** die flexible Flanschverbindung (9) wenigstens ein an den Flansch (4) angefügtes Rohr (8) aufweist.

## Claims

1. Exhaust system for diesel vehicles, comprising at least one dosing apparatus (11) for introducing and dosing a pollutant-reducing medium into an exhaust gas flowing through a flow pipe (1) of an exhaust tract (13) of an internal combustion engine (14), in particular for introducing a reducing agent and/or a reducing agent precursor such as for example urea and/or an aqueous urea solution, wherein the exhaust tract (13) has at least one flexible flange connection (9),
**characterized in that** the flexible flange connection (9) has at least one floating flange (2), wherein the floating flange (2) permits the free rotation of the pipe (1) and the flexible flange connection (9) is arranged in particular in the region of the mixing path (1) and upstream of the SCR catalytic converter (10) in a flow direction of the exhaust gas, wherein the flexible flange connection (9) has at least two flanges (2, 4), and wherein the flexible flange connection (9) has at least one pipe (1) which is flanged at the flow outlet side, and wherein after the two pipes (1, 8) have been set in the desired manner relative to one another, the flanges (2, 4) or flange plates are screwed together, and here, the seal (3) is compressed between the flanged end face of the pipe (1) and the counterpart flange (4) by means of bolts (5), spacer sleeves (6) and nuts (7).

2. Exhaust system for diesel vehicles according to one or more of the preceding claims,
**characterized in that** the flexible flange connection (9) has at least one pipe (8) joined to the flange (4).

## Revendications

1. Installation de gaz d'échappement pour véhicules diesel, comprenant au moins un dispositif de dosage (11) pour introduire et doser un milieu réduisant les substances nocives dans un gaz d'échappement s'écoulant à travers un conduit d'écoulement (1) d'une ligne d'échappement (13) d'un moteur à combustion interne (14), en particulier pour introduire un agent réducteur et/ou un précurseur d'agent réducteur, tel que par exemple de l'urée ou une solution aqueuse d'urée, la ligne d'échappement (13) présentant au moins un raccord à brides flexible (9),
**caractérisée en ce que** le raccord à brides flexible (9) présente au moins une bride libre (2), la bride libre (2) permettant la rotation libre du conduit (1) et le raccord à brides flexible (9) étant disposé en particulier dans la région de la section de mélange (1) et dans la direction d'écoulement du gaz d'échappement avant le catalyseur RCS (10), le raccord à brides flexible (9) présentant au moins deux brides (2, 4) et le raccord à brides flexible (9) présentant au moins un conduit (1) bordé au niveau du côté de sortie du côté de l'écoulement et, après l'ajustement souhaité des deux conduits (1, 8) l'un par rapport à l'autre, les brides (2, 4) ou les plaques à brides étant vissées ensemble, le joint d'étanchéité (3) étant ainsi pressé entre la surface frontale bordée du conduit (1) et la bride conjuguée (4) au moyen de vis (5), de douilles d'espacement (6) et d'écrous (7).

2. Installation de gaz échappement pour véhicules diesels selon l'une quelconque ou plusieurs des revendications précédentes,
**caractérisée en ce que** le raccord à brides flexible (9) présente au moins un conduit (8) assemblé à la bride (4).
